# EUROPEAN PATENT SPECIFICATION

(11) **EP 3 138 390 B1**
(45) Date of publication and mention of the grant of the patent: **18.04.2018**
(21) Application number: 15382438.8
(22) Date of filing: 04.09.2015
(51) Int. Cl.: A01G 13/02

(54) **DEVICE FOR FOLDING AND UNFOLDING NET-TYPE PROTECTIVE COVERS IN CROP FIELDS**
VORRICHTUNG ZUM FALTEN UND ENTFALTEN VON NETZARTIGEN SCHUTZABDECKUNGEN IN GETREIDEFELDERN
DISPOSITIF POUR LE PLIAGE ET LE DÉPLIAGE DE CAPOTS PROTECTEURS DE TYPE FILET DANS DES CHAMPS DE CULTURE

(43) Date of publication of application: 08.03.2017
(73) Proprietor: Cojocaru, Dumitru Mitrel, 25180 Alcarras (Lleida) (ES)
(72) Inventor: Cojocaru, Dumitru Mitrel, 25180 Alcarras (Lleida) (ES)
(74) Representative: Pons

(56) References cited:
- WO-A1-2013/016830
- FR-A- 1 464 097
- FR-A1- 2 883 320
- US-A- 4 296 568

## Description

### OBJECT OF THE INVENTION

The present invention relates to a device for folding and unfolding crop protection netting, specially designed for protecting fruit trees from the adverse effects of hail and similar atmospheric agents, and is therefore applicable to vegetable protection equipment, specifically devices for deploying protective covering for plants.

### BACKGROUND OF THE INVENTION

The use of diverse equipment for deploying and removing protective netting in the event of adverse weather conditions such as hail which affect all types of crops and particularly fruit trees, is well known in the state of the art.

Said hail protection nets, of varying width and length equivalent to that of the rows of plants to be covered, are normally disposed thereover through the installation of support posts aligned with the row and secured by means of a fixed upper or ridge cable that joins the upper ends of said posts. The lateral ends of the net are joined to those of the nets of the adjacent rows by means of clips, zips or other fastening means, thereby forming a continuous net that covers and protects the entire underlying plantation.

The installation of said protective netting in crop fields requires retraction and deployment tasks that are currently performed manually.

In fact, performing regular maintenance tasks in agriculture, such as for example during the snow season, when the nets must be removed in order to prevent them from breaking under the weight of the accumulated snow, requires retracting the netting manually, which requires the use of labour to open the clips or zips that join the lateral edges that fasten the nets together and subsequently roll up said nets around their longitudinal axis coincident with the row of trees. Another drawback of this system is that, on separating the lateral joining edges of the nets, they fall on and become entangled in the tree branches, causing breakage and damages both in the nets themselves and in the tree branches, leaves and fruit.

French patent FR2883320 discloses a device for folding and unfolding hail protection nets in crop fields comprising a series of posts disposed in rows, a set of hail-retaining protection nets joined to the posts by means of upper ancillary fixed cables, main shaft pulleys disposed in pairs on the upper part of the posts, where through corresponding locked-coil main cables run, a second lower ancillary cable along the posts of each row, and net deployment cables fixed to attachment points on the lateral ends of the net, extending from said attachment pint towards the adjacent row.

In summary, well-known systems for disposing hail protection nets have, inter alia, two major drawbacks, such as the high cost of labour required to retract and deploy them, and the problems arising from breakage in the nets and in the trees they cover.

### DESCRIPTION OF THE INVENTION

The object of the present invention consists of a device which allows the quick and simple retraction and deployment of hail protection nets in crop fields, solving the aforementioned problems on being able to automate said actions easily and economically through the use of cables and pulleys.

To this end, a series of posts fixed to the ground in rows in correspondence with the rows of the corresponding plantation must firstly be installed in the crop field. Each post of the initial and final end of each row has two sets of main horizontal shaft pulleys, each of which is disposed on either side of the post near its upper end, wherethrough corresponding locked-coil cables run. Each row of posts also has another two fixed ancillary cables, an upper or ridge cable whereon the hail protection net is mounted and a lower cable, both cables being equipped with a series of shackles or rings disposed along the entire length thereof, in the manner of passthroughs for the net deployment and retraction cables described below.

The hail protection net or mesh has a plurality of attachment points evenly distributed along the entire length of its lateral edges, to which two types of cables are fixed:
- Cables for deploying the net that stretch it towards the exterior of the tree rows. To this end, each of these cables extends towards the adjacent row, passes through the corresponding rings disposed along the length of the lower ancillary fixed cable of said adjacent row and subsequently returns to its row to connect to the lower section of the locked-coil cable
- Cables for retracting the net that retract said net towards the interior of the rows of trees. To this end, each of these cables extends towards the upper part of its row, passing through the rings of the fixed upper or ridge cable until finally connecting to the upper section of the locked-coil cable of its row.

The ends of the cables for deploying the netting comprise elastic sections that enable a small opening in the net in the event of accumulation of large amounts of hail on the upper part thereof when deployed wherethrough the hail can fall to the ground, thereby avoiding possible damages due to the excess weight on both the net itself and on the supporting structure.

This arrangement of pulleys, cables and posts that make up the claimed device is repeated for each row of trees or plants that compose the crop field and easily adapts to its geometric configuration. Ancillary posts must be installed on the outer lateral ends of the field in order to secure the lower ancillary fixed cable that will aid the deployment of the hail protection nets that will protect said end of the crop field.

With this configuration, on rotating the main pulleys of the horizontal shaft disposed on the posts of the initial and final ends of each line their respective cables circulate, the upper section in one direction and the lower section in the opposite direction, thereby proceeding to the deployment and retraction of the net in the direction of rotation of the main pulleys, on having the main cables connected to the net actuation cables specifically, the deployment cable is connected to the lower section and the retraction cable to the upper section.

As regards the actuation of the device, in order to allow deployment or retraction of the protective netting, whether in the entire crop field or only in specific zones according to need, it is performed in a centralised manner and in different ways, whether wirelessly or using mechanically connected gears and shafts, or also by means of cables.

In a preferred embodiment, the simultaneous actuation of the device is performed in a centralized manner by means of cables, to which end another two pairs of pulleys are disposed in each of the posts at the head of each row, in this case horizontal or vertical rotating shaft pulleys, wherethrough two pairs of locked-coil actuation cables run, the upper cables being connected to the upper sections of the main locked-coil cables of each row, and the lower cables connected to the lower sections of said main cables. Therefore, on moving the upper actuation cables, the system will rotate in one direction (deployment or retraction), while on pulling on the lower cables it will rotate in the opposite direction. In order to perform said movement and be able to deploy or retract the nets in an easy and synchronised manner, the ends of the respective actuation cables are connected to a winding drum that may be turned manually or using a small electric motor.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1 shows a general perspective view of the device, wherein its main elements can be observed.
Figure 2 shows a perspective view of the post at the head of the row, wherein the general layout of cables and pulleys can be observed.
Figure 3 shows a perspective view of the head of the row with the net deployed.

### PREFERRED EMBODIMENT OF THE INVENTION

The claimed device for folding and unfolding protective netting in crop fields of the invention and shown in the aforementioned drawings consists, in its preferred embodiment, of a support structure formed by a series of posts (1) fixed to the ground forming rows in correspondence with the plantation row, said posts preferably having a greater height than that of the plants we aim to protect.

The posts (1) of each of the rows that form the support structure are joined together by means of an ancillary fixed cable (2) or ridge cable that extends joining the upper parts of said posts and having small shackles or rings (3) evenly distributed along the entire length thereof. Said upper ancillary cable (2) acts as a support for disposing the protective hail-retaining netting or mesh (4).

The protective netting (4), essentially rectangular in shape, is disposed on the ridge cable, joined thereto by means of the rings (3), along their central longitudinal axis, so that the same netting (4) surface remains on either side of the row of posts on being deployed. Said netting (4) has a length equivalent to that of the plantation row whereon it is disposed and a width such as to cover the underlying plants.

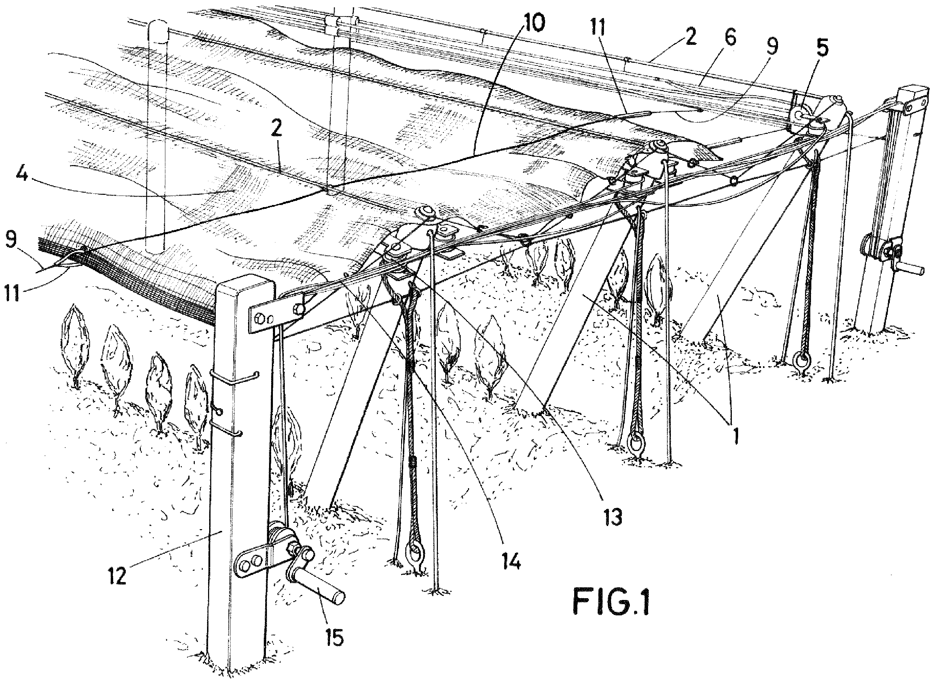

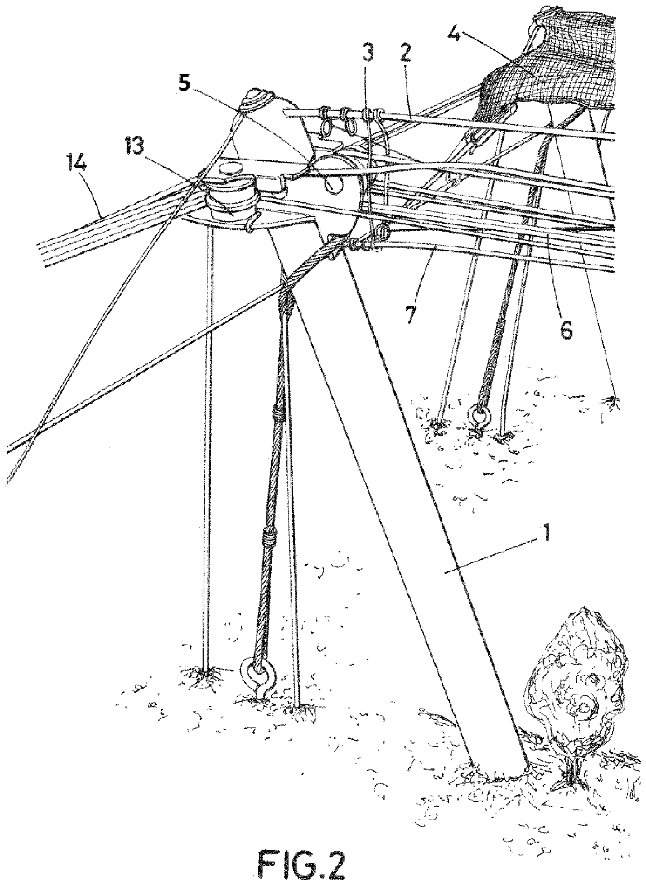

Main horizontal shaft pulleys (5) are disposed in pairs one on either side of the post on the upper part of the initial and final posts (1) of each row, wherethrough corresponding locked-coil main cables (6) run, as can be seen in Figures 1 and 2.

Each row of posts also has a second lower ancillary fixed cable (7) secured to each row of posts at a height below that at which the locked-coil main cables (6) are disposed, which extends joining the first and last post of said row with all the intermediate posts, which have second shackles or rings (8) regularly disposed along the entire length thereof.

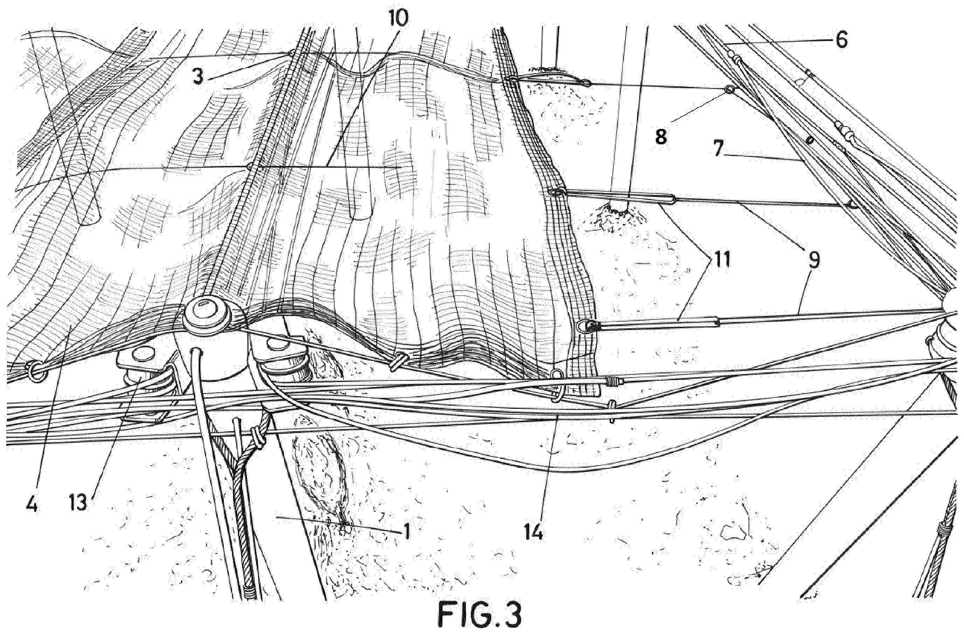

The protective netting (4) has a series of attachment points on its lateral major sides, regularly disposed along the entire length thereof, whereto net deployment cables (9) are fixed, said deployment cables (9) passing through the rings (8) of the lower ancillary fixed cable (7) of the adjacent row to return to its row and finally connect to the lower section of the locked-coil main cable (6), as can be observed in Figure 3.

In order to remove the netting (4), it has retraction cables (10), also fixed to the same attachment points wherein the deployment cables (9) are disposed. In this case, these retraction cables (10) extend, from said initial point, through the rings (8) of the lower ancillary fixed cable (7) of its own row until finally connecting to the upper section of the main cable (6), closing its row.

It has also been envisaged that the ends of the netting deployment cables (9) will comprise elastic sections (11) which enable a small opening in the netting (4) in the event of accumulation of large amounts of snow or hail on the upper part thereof, wherethrough it can fall to the ground, thereby avoiding possible damages to the system due to excess weight both on the net itself and on the support structure.

In order to complete the device and ensure the sealing and continuity thereof, a row of ancillary posts (12) must be installed on the outer lateral ends of the field in order to secure the lower ancillary fixed cable (7) that will aid the deployment of the hail protection nets (4) that will protect said final end of the crop field.

In a preferred embodiment, the simultaneous actuation of the device for proceeding with the deployment or retraction of the protection netting, either throughout the crop field or only in a specific zone according to need, is performed in a centralised manner by means of cables. To this end, a pair of horizontal or vertical rotating shaft actuation pulleys (13) are disposed on the upper part of each of the posts (1) at the head of each row, next to the main horizontal shaft pulleys (5), wherethrough two pairs of actuation cables (14) run, wherein the upper actuation cables are connected to the upper sections of the locked-coil main cables (6) and the lower actuation cables are connected to the lower sections of said main cables (6), as can be observed in figures 2 and 3. Therefore, on moving the upper actuation cables the system will rotate in one direction (deployment or retraction), while on pulling the lower actuation cables it will rotate in the opposite direction. In order to perform said movement and be able to deploy or retract the nets in an easy and synchronised manner, the ends of the respective actuation cables (14) are connected to an actuation winding drum (15) that can be rotated manually or using a small electric motor.

## Claims

1. Device for folding and unfolding hail protection nets in crop fields which comprises:
- a support structure formed by a series of posts (1) fixed to the ground in rows in correspondence with the crops,
- a set of hail-retaining protection nets or mesh (4), adapted to cover the crop field, joined to the rows of posts (1) by means of upper ancillary fixed cables (2) or ridge cables that extend joining the upper parts of the posts that constitute each row and which have shackles or rings (3) evenly distributed along the entire length thereof, to which the net is joined (4),
- main horizontal shaft pulleys (5), disposed in pairs on the sides of the upper part of the posts (1) of the initial and final ends of each row, wherethrough corresponding locked-coil main cables (6) run,
- a second lower ancillary fixed cable (7) that extends along the posts of each row, disposed at a height lower than that of the locked-coil main cables (6), said ancillary fixed cable (7) also being equipped with second shackles or rings (8) evenly distributed along the entire length thereof, and
- net deployment cables (9) fixed to attachment points evenly distributed along the lateral ends of said net (4) that extend, from said attachment point, towards the adjacent row,
being the device **characterized in that**
- the deployment cables (9) pass through the rings (8) of the lower ancillary fixed cable (7) to return to their row and connect to the lower section of the locked-coil main cable (6) of their row, and **in that**
- the device further comprises net retraction cables (10) fixed to the same net (4) attachment points as the deployment cables (9), which pass, from said attachment point, through the rings (8) of the lower ancillary fixed cable (7) of their own row to connect to the upper section of the locked-coil main cable (6) of their own row.

2. Device for folding and unfolding hail protection nets in crop fields, according to claim 1, **characterised in that** the ends of the net (4) deployment cables (9) comprise elastic sections (11) which enable a small opening in the net (4) wherethrough the accumulated hail can fall to the ground, avoiding damage thereto.

3. Device for folding and unfolding hail protection nets in crop fields, according to claim 1, **characterised in that** the shafts of the main pulleys (5) are joined together by means of cables in order to actuate the device from a single point.

4. Device for folding and unfolding hail protection nets in crop fields, according to claim 1, **characterised in that** the shafts of the main pulleys (5) are wirelessly motorised.

5. Device for folding and unfolding hail protection nets in crop fields, according to claim 1, **characterised in that** the shafts of the main pulleys (5) are centrally actuated by means of mechanically connected gears and shafts.

6. Device for folding and unfolding hail protection nets in crop fields, according to claim 1, **characterised in that** the shafts of the main pulleys (5) are centrally actuated by means of cables disposing, at the head of each row, two pairs of horizontal actuation pulleys (13) with vertical rotating shaft on the posts (1) wherethrough two pairs of actuation cables (14) run, wherein the upper actuation cables are connected to the respective upper sections of the locked-coil main cables (6) and the lower actuation cables are connected to the respective lower sections of the locked-coil main cables (6), so that on pulling the upper actuation cables the system will rotate in one direction (retraction or deployment) and, on pulling on the lower actuation cables, it will rotate in the opposite direction.

7. Device for folding and unfolding hail protection nets in crop fields, according to claim 6, **characterised in that** the ends of the actuation cables (14) are connected to an actuation winding drum (15) that is manually rotated.

8. Device for folding and unfolding hail protection nets in crop fields, according to claim 6, **characterised in that** the ends of the actuation cables (14) are connected to an actuation winding drum (15) that is rotated by means of a small electric motor.

## Patentansprüche

1. Vorrichtung zum Falten und Entfalten von Hagelschutznetzen in Nutzpflanzenfeldern, die Folgendes umfasst:
- eine tragende Struktur, die aus einer Reihe von Pfählen (1) gebildet ist, die in Reihen in Übereinstimmung mit den Nutzpflanzen am Boden befestigt sind,
- einen Satz von Schutznetzen oder -gittern (4) zum Zurückhalten von Hagel, die zur Abdeckung des Nutzpflanzenfelds ausgelegt sind, wobei sie mit den Reihen von Pfählen (1) mittels oberer fester Zusatzseile (2) oder Dachfirst-Seile verbunden sind, die sich über die oberen Teile der Pfähle erstrecken, die jede Reihe bilden und die über ihre gesamte Länge gleichmäßig verteilte Schäkel oder Ringe (3) aufweisen, mit denen das Netz (4) verbunden ist,
- horizontale Wellen der Hauptumlenkrollen (5), die paarweise an den Seiten des oberen Teils der Pfähle (1) der vorderen und hinteren Enden jeder Reihe angeordnet sind, durch die entsprechende vollverschlossene Hauptseile (6) durchlaufen,
- ein sich entlang der Pfähle jeder Reihe erstreckendes zweites unteres festes Zusatzseil (7), das in einer Höhe angeordnet ist, die niedriger als diejenige der vollverschlossenen Hauptseile (6) ist, wobei das feste Zusatzseil (7) auch mit zweiten Schäkeln oder Ringen (8) ausgestattet ist, die gleichmäßig über die gesamte Länge verteilt sind, und
- Netzöffnungsseile (9), die an Befestigungspunkten befestigt sind, die gleichmäßig entlang der seitlichen Enden des Netzes (4) verteilt sind, die sich von dem Befestigungspunkt aus in Richtung der benachbarten Reihe erstrecken,
wobei die Vorrichtung **dadurch gekennzeichnet ist, dass**
- dass die Öffnungsseile (9) durch die Ringe (8) des unteren festen Zusatzseils (7) laufen, um zu ihrer Reihe zurückzukehren und sich mit dem unteren Abschnitt des vollverschlossenen Hauptseils (6) ihrer Reihe verbinden, und dadurch, dass
- die Vorrichtung ferner Netzrückzugsseile (10) aufweist, die an denselben Befestigungspunkten des Netzes (4) wie die Öffnungsseile (9) befestigt sind, die von dem Befestigungspunkt aus durch die Ringe (8) des unteren festen Zusatzseils (7) ihrer eigenen Reihe laufen, um sich mit dem oberen Abschnitt des vollverschlossenen Hauptseils (6) zu verbinden.

2. Vorrichtung zum Falten und Entfalten von Hagelschutznetzen in Nutzpflanzenfeldern nach Anspruch 1, **dadurch gekennzeichnet, dass** die Enden der Öffnungsseile (9) des Netzes (4) elastische Abschnitte (11) umfassen, die eine kleine Öffnung in dem Netz (4) ermöglichen, durch die der angesammelte Hagel auf den Boden fallen kann, um Schäden daran zu vermeiden.

3. Vorrichtung zum Falten und Entfalten von Hagelschutznetzen in Nutzpflanzenfeldern nach Anspruch 1, **dadurch gekennzeichnet, dass** die Wellen der Hauptumlenkrollen (5) mittels Seilen miteinander verbunden sind, um die Vorrichtung von einem einzigen Punkt aus zu betätigen.

4. Vorrichtung zum Falten und Entfalten von Hagelschutznetzen in Nutzpflanzenfeldern nach Anspruch 1, **dadurch gekennzeichnet, dass** die Wellen der Hauptumlenkrollen (5) drahtlos motorisiert sind.

5. Vorrichtung zum Falten und Entfalten von Hagelschutznetzen in Nutzpflanzenfeldern nach Anspruch 1, **dadurch gekennzeichnet, dass** die Wellen der Hauptumlenkrollen (5) zentral über mechanisch verbundene Zahnräder und Wellen betätigt werden.

6. Vorrichtung zum Falten und Entfalten von Hagelschutznetzen in Nutzpflanzenfeldern nach Anspruch 1, **dadurch gekennzeichnet, dass** die Wellen der Hauptumlenkrollen (5) zentral mittels Seilen betätigt werden, die am Kopf jeder Reihe mit zwei Paaren von Umlenkrollen (13) zur horizontalen Betätigung mit vertikaler Drehwelle an den Pfählen (1) bereitgestellt sind, durch die zwei Paare von Betätigungsseilen (14) durchlaufen, wobei die oberen Betätigungsseile mit den entsprechenden oberen Abschnitten der vollverschlossenen Hauptseile (6) verbunden sind und die unteren Betätigungsseile mit den entsprechenden unteren Abschnitten der vollverschlossenen Hauptseile (6) verbunden sind, sodass beim Ziehen an den oberen Betätigungsseilen das System in eine Richtung rotiert (Zurückziehen oder Öffnen) und beim Ziehen an den unteren Betätigungsseilen in die entgegengesetzte Richtung rotiert.

7. Vorrichtung zum Falten und Entfalten von Hagelschutznetzen in Nutzpflanzenfeldern nach Anspruch 6, **dadurch gekennzeichnet, dass** die Enden der Betätigungsseile (14) mit einer Betätigungs-Aufwickeltrommel (15) verbunden sind, die manuell rotiert wird.

8. Vorrichtung zum Falten und Entfalten von Hagelschutznetzen in Nutzpflanzenfeldern nach Anspruch 6, **dadurch gekennzeichnet, dass** die Enden der Betätigungsseile (14) mit einer Betätigungs-Aufwickeltrommel (15) verbunden sind, die mittels eines kleinen Elektromotors rotiert wird.

## Revendications

1. Dispositif pour plier et déplier des filets de protection contre la grêle dans les champs de culture qui comprend :
- une structure de support formée d'une série de poteaux (1) fixés au sol en rangées en correspondance avec les cultures,
- un ensemble de filets ou maille de protection pour retenir la grêle (4), adaptés pour recouvrir le champ de culture, reliés aux rangées de poteaux (1) au moyen de câbles fixes auxiliaires supérieurs (2) ou câbles striés qui s'étendent en se reliant aux parties supérieures des poteaux qui constituent chaque rangée et qui ont des manilles ou anneaux (3) uniformément répartis sur tout le long de ces derniers, auxquels le filet est relié (4),
- des poulies principales à arbre horizontale (5), disposées en paire sur les côtés de la partie supérieure des poteaux (1) des extrémités initiales et finales de chaque rangée, par où passent les câbles principaux clos correspondants (6),
- un deuxième câble fixe auxiliaire inférieure (7) qui s'étend le long des poteaux de chaque rangée, disposé à une hauteur plus petite que celle des câbles principaux clos (6), ledit câble fixe auxiliaire (7) étant également équipé de deuxièmes manilles ou anneaux (8) uniformément répartis sur tout le long de ce dernier, et
- des câbles de déploiement de filet (9) fixés aux points d'attache uniformément répartis le long des extrémités latérales dudit filet (4) qui s'étendent, depuis ledit point d'attache, vers la rangée adjacente,
le dispositif étant **caractérisé en ce que**
- les câbles de déploiement (9) passent par les anneaux (8) du câble fixe auxiliaire inférieure (7) pour retourner à leur rangée et se raccorder à la section inférieure du câble principal clos (6) de leur rangée, et **en ce que**
- le dispositif comprend en outre des câbles de retrait de filet (10) fixés aux mêmes points d'attache de filet (4) que les câbles de déploiement (9), qui passent, depuis ledit point d'attache, par les anneaux (8) du câble fixe auxiliaire inférieure (7) de leur propre rangée pour se raccorder à la section supérieure du câble principal clos (6) de leur propre rangée.

2. Dispositif pour plier et déplier des filets de protection contre la grêle dans les champs de culture, selon la revendication 1, **caractérisé en ce que** les extrémités des câbles de déploiement (9) du filet (4) comprennent des sections élastiques (11) qui permettent une petite ouverture dans le filet (4) par où la grêle accumulée peut tomber au sol, en évitant de l'endommager.

3. Dispositif pour plier et déplier des filets de protection contre la grêle dans les champs de culture, selon la revendication 1, **caractérisé en ce que** les arbres des poulies principales (5) sont reliés ensemble au moyen de câbles afin d'actionner le dispositif depuis un seul point.

4. Dispositif pour plier et déplier des filets de protection contre la grêle dans les champs de culture, selon la revendication 1, **caractérisé en ce que** les arbres des poulies principales (5) sont motorisés sans fil.

5. Dispositif pour plier et déplier des filets de protection contre la grêle dans les champs de culture, selon la revendication 1, **caractérisé en ce que** les arbres des poulies principales (5) sont actionnés au centre au moyen de pignons et d'arbres mécaniquement raccordés.

6. Dispositif pour plier et déplier des filets de protection contre la grêle dans les champs de culture, selon la revendication 1, **caractérisé en ce que** les arbres des poulies principales (5) sont actionnés au centre au moyen de la disposition de câbles, à la tête de chaque rangée, deux paires de poulies d'actionnement horizontales (13) avec un arbre de rotation vertical sur les poteaux (1) par où passent deux paires de câbles d'actionnement (14), dans lequel les câbles d'actionnement supérieurs sont raccordés aux sections supérieures respectives des câbles principaux clos (6) et les câbles d'actionnement inférieurs sont raccordés aux sections inférieures respectives des câbles principaux clos (6), de sorte qu'en tirant les câbles d'actionnement supérieurs le système tournera dans un sens (retrait ou déploiement) et, en tirant les câbles d'actionnement inférieurs, il tournera dans le sens opposé.

7. Dispositif pour plier et déplier des filets de protection contre la grêle dans les champs de culture, selon la revendication 6, **caractérisé en ce que** les extrémités des câbles d'actionnement (14) sont raccordées à un tambour d'enroulement à actionnement (15) qui est manuellement tourné.

8. Dispositif pour plier et déplier des filets de protection contre la grêle dans les champs de culture, selon la revendication 6, **caractérisé en ce que** les extrémités des câbles d'actionnement (14) sont raccordées à un tambour d'enroulement à actionnement (15) qui est tourné au moyen d'un petit moteur électrique.
